# EUROPÄISCHE PATENTSCHRIFT

(11) **EP 1 982 168 B1**
(45) Veröffentlichungstag und Bekanntmachung des Hinweises auf die Patenterteilung: **14.08.2013**
(21) Anmeldenummer: 07722794.0
(22) Anmeldetag: 06.02.2007
(51) Int. Cl.: G01N 27/416

(54) **SENSORVORRICHTUNG FÜR EIN ELEKTROCHEMISCHES MESSGERÄT UND VERFAHREN ZUR DURCHFÜHRUNG ELEKTROCHEMISCHER MESSUNGEN**
SENSOR APPARATUS FOR AN ELECTROCHEMICAL MEASURING DEVICE AND METHOD FOR CARRYING OUT ELECTROCHEMICAL MEASUREMENTS
DISPOSITIF DE CAPTEURS POUR APPAREIL DE MESURE ÉLECTROCHIMIQUE ET PROCÉDÉ DE RÉALISATION DE MESURES ÉLECTROCHIMIQUES

(30) Priorität: 07.02.2006 DE 102006006347
(43) Veröffentlichungstag der Anmeldung: 22.10.2008
(73) Patentinhaber: Universität Rostock, 18055 Rostock (DE)
(72) Erfinder: FLECHSIG, Gerd-Uwe, 17166 Teterow (DE); GIMSA, Jan, 18146 Rostock (DE); GRÜNDLER, Peter, 01069 Dresden (DE); GRABOW, Harald, 18059 Sildemow (DE)
(74) Vertreter: Gross, Felix
(86) Internationale Anmeldenummer: PCT/EP2007/001132
(87) Internationale Veröffentlichungsnummer: WO 2007/090674

(56) Entgegenhaltungen:
- WO-A1-2005/098438
- DE-A1- 19 543 060
- FLECHSIG G-U ET AL: "DNA hybridization detection at heated electrodes" LANGMUIR, ACS, WASHINGTON, DC, US, Bd. 21, Nr. 17, 19. Juli 2005 (2005-07-19), Seiten 7848-7853, XP002378872 ISSN: 0743-7463
- ZERIHUN ET AL: "Electrically heated cylindrical microelectrodes. The reduction of dissolved oxygen on Pt" JOURNAL OF ELECTROANALYTICAL CHEMISTRY AND INTERFACIAL ELECTROCHEMISTRY, ELSEVIER, AMSTERDAM, NL, Bd. 404, Nr. 2, 21. März 1996 (1996-03-21), Seiten 243-248, XP005278119 ISSN: 0022-0728
- BARANSKI A S: "HOT MICROELECTRODES" ANALYTICAL CHEMISTRY, AMERICAN CHEMICAL SOCIETY. COLUMBUS, US, Bd. 74, Nr. 6, 15. März 2002 (2002-03-15), Seiten 1294-1301, XP001115333 ISSN: 0003-2700

## Beschreibung

Die Erfindung betrifft eine Sensorvorrichtung für ein elektrochemisches Messgerät nach dem Oberbegriff des Anspruchs 1 und ein Verfahren zur Durchführung elektrochemischer Messungen bei erhöhter Temperatur nach dem Oberbegriff des Anspruchs 15.

Eine solche Sensorvorrichtung für ein elektrochemisches Messgerät wird für elektrochemische Messungen eingesetzt, um anhand der Erfassung elektrochemischer Reaktionen beispielsweise Stoffe nachzuweisen, ihren Zustand oder ihre Konzentration zu bestimmen oder thermodynamische und/oder kinetische Parameter der elektrochemischen Reaktionen zu ermitteln. Die Sensorvorrichtung für ein elektrochemisches Messgerät weist mindestens eine Elektrode auf, mittels derer ein elektrochemisches Signal erfasst wird.

Um elektrochemische Messungen bei erhöhten Temperaturen durchzuführen, werden meistens elektrochemische Zellen eingesetzt, die durch einen Thermostaten mit Wasser als Wärmeüberträger auf die gewünschte Temperatur gebracht werden, wobei die in den elektrochemischen Zellen befindliche Elektrolytmenge aufgeheizt wird. Solche Anordnungen sind nachteilig, da große Energiemengen zum Aufheizen der elektrochemischen Zelle nötig sind, Temperaturwechsel nur sehr langsam erfolgen und empfindliche Stoffe in der Elektrolytlösung durch die Erwärmung in Mitleidenschaft gezogen werden können.

Um diese Nachteile zu überwinden, können Sensorvorrichtungen daher Elektroden aufweisen, die indirekt oder direkt mittels eines Heizstroms beheizbar sind.

Bei einer indirekt beheizten Elektrode erfolgt die Erwärmung der Elektrode mittels galvanisch von der Elektrode getrennten Heizelementen, die den Aufbau der Sensoren verkomplizieren, ebenfalls eine Erwärmung zumindest eines großen Teils der Elektrolytlösung bewirken und daher nur langsame Temperaturwechsel ermöglichen und eine Miniaturisierung der Elektroden erheblich erschweren.

Bei direkt beheizten Elektroden hingegen erfolgt die Erwärmung der Elektroden durch einen hochfrequenten, einen Heizstrom darstellenden Wechselstrom, der über zwei Anschlüsse an die Elektrode angelegt wird und durch die Elektrode fließt und auf diese Weise die Elektrode direkt beheizt. Zum Anschluss des elektrochemischen Messgerätes weist die Elektrode einen dritten Anschluss auf, der, um eine störungsfreie elektrochemische Messung zu ermöglichen, symmetrisch zu den beiden Anschlüssen für den Heizstrom mittig an der Elektrode angeordnet ist. Durch diese Anordnung des Anschlusses für das elektrochemische Messgerät werden störende Einflüsse des Heizstroms auf die elektrochemischen Messsignale weitgehend vermieden.

Nachteilig bei herkömmlichen Sensorvorrichtungen mit direkt beheizten Elektroden ist jedoch der komplizierte Aufbau der Elektroden mit jeweils drei mit der Elektrode verbundenen Anschlüssen, der die Verwendung von Elektrodenarrays mit einer Vielzahl von Elektroden erheblich erschwert und die Möglichkeiten einer Miniaturisierung solcher Elektrodenanordnungen erheblich einschränkt. Nachteilig ist weiterhin, dass im Herstellungsprozess nur geringe Toleranzen bezüglich der symmetrischen Anordnung des dritten, zur Verbindung mit dem elektrochemischen Messgerät dienenden Anschlusses der Elektrode erlaubt sind, um durch den Heizstrom verursachte und während einer Messung aufgenommene Störsignale klein zu halten. Zudem erfährt die Elektrode durch den mittleren, mit dem elektrochemischen Messgerät verbundenen und Wärme ableitenden Anschluss eine thermische Störung, so dass Temperaturgradienten auf der Reaktionsoberfläche der Elektrode, mittels derer das elektrochemische Signal erfasst wird, entstehen.

Aus der Veröffentlichung T. Zerihun, P. Gründler, "Electrically heated cylindrical microelectrodes. The reduction of disolved oxygen on Pt", J. Electroanalytical Chemistry, 404 (1996), 243-248 ist eine Sensorvorrichtung mit einer aus Platin hergestellten Mikroelektrode bekannt, bei der ein Wechselstrom von 100kHz zum Einsatz kommt.

Die Veröffentlichung G.-U. Flechsig et al., "DNA Hybridization Detection at Heated Electrodes", Langmuir 2005, 21, 7448-7853 beschreibt die Verwendung einer Anordnung zum lokalen Aufheizen einer DNA-Proben-modifizierten Goldelektrode zum Zwecke eine elektrochemischen Detektion einer DNA-Hybridisierung. Bei der Detektion wird nicht simultan geheizt und gemessen. Dies erfolgt in unterschiedlichen Schritten.

Die Veröffentlichung A.S. Baranski, "Hot Microelectrodes", Anal. Chem. 2002, 74, 1294-1301 beschreibt die Wärmeerzeugung an einer scheibenförmigen Mikroelektrode mittels einer hochfrequenten Wechselspannung.

Bei einer aus der WO 2005/098438 A1 bekannten Anordnung eines Analyse-Arrays weist eine heizbare Elektrode eine Querschnittsfläche auf, die entlang einer Längsachse variiert, wobei Heizstromkontakte mit einer Deckschicht isoliert sind.

Aufgabe der vorliegenden Erfindung ist es, eine Sensorvorrichtung für ein elektrochemisches Messgerät und ein Verfahren zur Durchführung elektrochemischer Messungen zur Verfügung zu stellen, die störungsarme elektrochemische Messungen mit direkt beheizten Elektroden bei vereinfachtem Aufbau der Elektroden ermöglichen.

Diese Aufgabe wird durch einen Gegenstand mit den Merkmalen des Anspruchs 1 gelöst.

Erfindungsgemäß ist dabei vorgesehen, dass eine Sensorvorrichtung für ein elektrochemisches Messgerät mindestens eine Elektrode aufweist, die mittels eines als Wechselstrom ausgebildeten Heizstroms beheizbar ist und einen ersten und einen zweiten Anschluss für die Zuleitung des Heizstroms aufweist. Das elektrochemische Messgerät ist dabei über einen dritten Anschluss mit der Elektrode verbunden, wobei die Verbindung des dritten Anschlusses mit der Elektrode über eine Brückenschaltung, die mit dem ersten und zweiten Anschluss verbunden ist, ausgebildet ist.

Mit der erfindungsgemäßen Sensorvorrichtung wird ein Sensor zur Verfügung gestellt, der zum einen nahezu störungsfreie Messungen ermöglicht und zum anderen einen vereinfachten Aufbau aufweist, da die mindestens eine Elektrode der Sensorvorrichtung nur noch zwei Anschlüsse aufweist und der Anschluss für das elektrochemische Messgerät über eine Brückenschaltung mit den beiden Anschlüssen des Heizstroms verbunden ist. Mittels der Brückenschaltung wird eine Entkopplung des Heizstroms vom durch das Messgerät erfassten elektrochemischen Signal erreicht. Die Brückenschaltung wirkt dabei wie eine Entbrummer-Schaltung, mittels derer der Heizstrom zum überwiegenden Teil durch die Elektroden geleitet wird und der Anschluss des elektrochemischen Messgerätes über die Brückenschaltung so mit den Anschlüssen für den Heizstrom an der Elektrode verbunden wird, dass sich die störenden Einflüsse des Heizstroms gerade kompensieren. Dadurch, dass die Elektrode mit zwei Anschlüssen auskommt, werden zudem Temperaturgradienten und übermäßiger Wärmeverlust durch zusätzliche an der Elektrode angeordnete Anschlüsse vermieden.

Der Heizstrom ist dabei bevorzugt als ein Wechselstrom mit einer Frequenz von mindestens 1 kHz, bevorzugt größer als 100 kHz ausgebildet.

Das mit der Sensorvorrichtung zu erfassende elektrochemische Signal hingegen kann im Gegensatz zum Heizstrom ein zeitlich nahezu konstantes oder zeitlich veränderliches Signal sein, das in der Regel niederfrequent mit Frequenzen weit unterhalb der Frequenz des Heizstroms ausgebildet ist.

Die Sensorvorrichtung ist so ausgebildet, dass die Brückenschaltung zwei symmetrische Anschlussarme aufweist, die an ihrem einen Ende jeweils mit einem der beiden Anschlüssen für die Zuleitung des Heizstroms und an ihrem anderen Ende in einem Verknüpfungspunkt miteinander und mit dem Anschluss des elektrochemischen Messgerätes verbunden sind. Über die zwei symmetrischen Anschlussarme erfolgt somit die Verbindung des elektrochemischen Messgerätes mit den Anschlüssen für den Helzstrom und somit mit der Elektrode, wobei an der Elektrode selbst kein gesonderter Anschluss für das elektrochemische Messgerät angeordnet zu sein braucht und somit eine Anordnung mit einer Elektrode mit lediglich zwei Anschlüssen geschaffen wird. Mittels der symmetrischen Ausbildung der Anschlussarme wird erreicht, dass sich die störenden Signale des Heizstroms am Anschluss des elektrochemischen Messgerätes gegenseitig aufheben.

Vorteilhafterweise weisen die beiden symmetrischen Anschlussarme der Brückenschaltung symmetrisch ausgebildete, also gleichwirkende Induktivitäten auf. Diese Induktivitäten wirken für den hochfrequenten Heizstrom sperrend, da sie für Signale hoher Frequenz eine große Impedanz aufweisen. Für ein niederfrequentes elektrochemisches Signal hingegen ist die Impedanz der Induktivitäten vernachlässigbar, so dass die elektrochemischen Signale nahezu ungehindert über die Anschlussarme zum elektrochemischen Messgerät gelangen können. Die als Brückenschaltung angeordneten Induktivitäten wirken somit wie ein Filter, der das störende Heizstromsignal unterdrückt, das zu messende elektrochemische Signal aber an den Anschluss des elektrochemischen Messgerätes leitet.

Um das gewünschte Filterverhalten zu erzielen und eine hinreichende Unterdrückung der Störsignale zu erreichen, sind die Induktivitäten in den Anschlussarmen zwischen dem Anschluss des elektrochemischen Messgerätes und den beiden Anschlüssen für die Zuleitung des Heizstroms vorteilhafterweise so ausgebildet, dass sie einen Induktivitätswert größer als 1 mH, bevorzugt größer als 100 mH, und einen ohmschen Widerstand kleiner als 1 Ohm aufweisen.

In einer bevorzugten Ausgestaltung der Sensorvorrichtung ist in einem Anschlusszweig zwischen dem Anschluss des elektrochemischen Messgerätes und dem Verknüpfungspunkt der beiden Anschlussarme der Brückenschaltung eine zusätzliche Induktivität angeordnet, über die das elektrochemische Messgerät mit den beiden Anschlussarmen der Brückenschaltung verbunden ist. Mittels der Induktivität im Anschlusszweig des elektrochemischen Messgerätes kann eine zusätzliche Dämpfung störender Signale und somit eine Verbesserung des Übertragungsverhaltens erzielt werden, da die Induktivität im Anschlusszweig eine große Impedanz für ein störendes hochfrequentes Heizstromsignal darstellt, aber für ein niederfrequentes elektrochemisches Signal vernachlässigbar ist.

Auch die induktivität im Anschlusszweig weist vorteilhafterweise einen Induktivitätswert größer als 1 mH, bevorzugt größer als 100 mH, und einen ohmschen Widerstand kleiner als 1 Ohm auf.

Vor und hinter der Induktivität im Anschlusszweig kann in einer bevorzugten Ausgestaltung jeweils eine Kapazität angeordnet sein, die den Anschlusszweig mit einer Masse verbindet. Auf diese Weise wird durch die Induktivität im Anschlusszweig und die vor bzw. hinter der Induktivität angeordneten Kapazitäten zwischen dem Anschlusszweig und der Masse ein Sperrkreis gebildet, der so abgestimmt sein kann, dass beispielsweise ein Signal mit der Frequenz des Heizstroms gesperrt und somit am Anschluss des elektrochemischen Messgerätes nahezu vollständig unterdrückt wird. Auf diese Weise können störende Einflüsse durch den Heizstrom am Anschluss des elektrochemischen Messgerätes nahezu vollständig unterdrückt werden. Das elektrochemische Messgerät erfasst dann ein elektrochemisches Signal mit einem großen Signal-zu-Rausch-Verhältnis, so dass empfindliche Messungen ermöglicht werden, ohne den Aufbau der Anordnung nennenswert zu verkomplizieren.

Anstelle der Induktivitäten oder zusätzlich zu den Induktivitäten können in einer Variante der Sensorvorrichtung in den beiden Anschlussarmen der Brückenschaltung auch symmetrisch ausgebildete ohmsche Widerstände angeordnet sein. Eine solche Anordnung kann insbesondere zur Erfassung höherfrequenter elektrochemischer Signale zweckdienlich sein, um eine Verzerrung des elektrochemischen Signals durch Induktivitäten zu vermeiden und gleichzeitig eine hinreichende Unterdrückung der störenden Heizstromsignale zu erreichen.

Bevorzugt weisen dabei die ohmschen Widerstände in den Anschlussarmen einen Widerstandswert auf, der um mindestens eine Größenordnung größer als der ohmsche Widerstand der Elektrode ist. Auf diese Weise wird erreicht, dass der Heizstrom im Wesentlichen durch die Elektrode fließt und nur zu einem kleinen Teil durch die Brückenschaltung. Die Entkopplung des durch die Brückenschaltung fließenden Heizstromsignals vom zu erfassenden elektrochemischen Signal erfolgt dann im wesentlichen durch die symmetrische Ausbildung der beiden Anschlussarme der Brückenschaltung, aufgrund derer sich die durch die Brückenschaltung fließenden Heizstromsignale am Anschlusspunkt des elektrochemischen Messgerätes gerade kompensieren.

In einer vorteilhaften Ausgestaltung der Sensorvorrichtung ist in dem Anschlusszweig zwischen dem Anschluss des elektrochemischen Messgerätes und den beiden Anschlussarmen der Brückenschaltung zusätzlich ein ohmscher Widerstand angeordnet, mittels dessen eine weitere Verbesserung des Übertragungsverhaltens, insbesondere des am Anschluss des elektrochemischen Messgerätes wirksamen Signal-zu-Rausch-Verhältnisses erzielt werden kann.

In einer vorteilhaften Variante der Sensorvorrichtung ist in der Brückenschaltung ein einstellbarer Widerstand zwischen dem Anschlusszweig und den beiden Anschlussarmen der Brückenschaltung vorgesehen, mittels dessen ein präziser Abgleich von Toleranzen in den Anschlussarmen und den in den Anschlussarmen angeordneten Bauelementen der Brückenschaltung durchgeführt werden kann.

In einer weiteren Variante sind in den beiden Anschlussarmen und in dem Anschlusszweig Induktivitäten und/oder ohmsche Widerstände in beliebiger Kombination angeordnet, wobei der Anschlusszweig über einen einstellbaren, als Spannungsteiler wirkenden ohmschen Widerstand mit den beiden Anschlussarmen der Brückenschaltung verbunden ist.

Die Aufgabe wird darüber hinaus durch ein Verfahren mit den Merkmalen des Anspruchs 9 gelöst.

Erfindungsgemäß ist dabei vorgesehen, dass ein Verfahren zur Durchführung elektrochemischer Messungen bei erhöhter Temperatur, unter Verwendung der erfindungsgemäßen Sensorvorrichtung, eine direkt durch einen als Wechselstrom ausgebildeten elektrischen Heizstrom geheizte Elektrode verwendet. Die elektrochemischen Messungen erfolgen dabei gleichzeitig mit der elektrischen Heizung der Elektrode, wobei für den Anschluss eines elektrochemischen Messgerätes an die Elektrode eine Brückenschaltung verwendet wird und mittels der Brückenschaltung durch den Heizstrom erzeugte Störsignale am Anschluss des elektrochemischen Messgerätes unterdrückt werden.

Es wird somit ein Verfahren geschaffen, mittels dessen elektrochemische Messungen bei erhöhten Temperaturen unter Verwendung einer direkt beheizten Elektrode durchgeführt werden können. Das Verfahren ermöglicht dabei, dass durch den Heizstrom verursachte Störsignale unterdrückt werden und somit das empfangene elektrochemische Signal nicht stören.

Denkbar und vorteilhaft ist es zum Beispiel, dass elektrochemische Messungen unter Verwendung der Voltammetrie, Amperometrie, Potentiometrie, Chronopotentiometrie, Stripping-Potentiometrie, Coulometrie und/oder Chronocoulometrie zur Bestimmung von Stoffkonzentrationen durchgeführt werden.

Weiterhin können die elektrochemischen Messungen unter Verwendung der Cyclovoltammetrie, Impedanzspektroskopie und/oder Spektroelektrochemie zur Untersuchung von Elektrodenvorgängen, insbesondere der Thermodynamik und Kinetik von Elektrodenreaktionen, der Abscheidung von Schichten und der Korrosion, durchgeführt werden.

In einer vorteilhaften Variante des Verfahrens erfolgt die elektrische Heizung der Elektrode mittels kurzer Heizstrompulse, die bevorzugt kürzer als 500 ms, insbesondere aber kürzer als 100 ms sind. Die elektrochemische Messung des elektrochemischen Signals kann dann vor Beginn und/oder kurz vor Ende eines jeden Heizstrompulses erfolgen.

In einer weiteren Ausgestaltung wird zur Durchführung der Amperometrie ein zeitlich konstantes Potential oder zur Durchführung der Voltammetrie ein zeitlich linear veränderliches Potential an die geheizte Elektrode angelegt.

Der der Erfindung zugrunde liegende Gedanke soll nachfolgend anhand der in den Zeichnungen dargestellten Figuren näher erläutert werden. Es zeigen:
- Figur 1: ein Schaltbild einer Sensorvorrichtung für ein elektrochemisches Messgerät mit einer Elektrode und einer Induktivitäten aufweisenden Brückenschaltung;
- Figur 2: ein Schaltbild der Sensorvorrichtung gemäß Figur 1 mit einer zusätzlichen Induktivität im Anschlusszweig eines elektrochemischen Messgerätes;
- Figur 3: ein Schaltbild der Sensorvorrichtung gemäß Figur 2 mit vor und hinter der Induktivität im Anschlusszweig des elektrochemischen Messgerätes angeordneten Kapazitäten und
- Figur 4: ein Schaltbild einer Sensorvorrichtung mit einer Elektrode und einer Widerstände aufweisenden Brückenschaltung.

### 1. Aufbau der Sensorvorrichtung

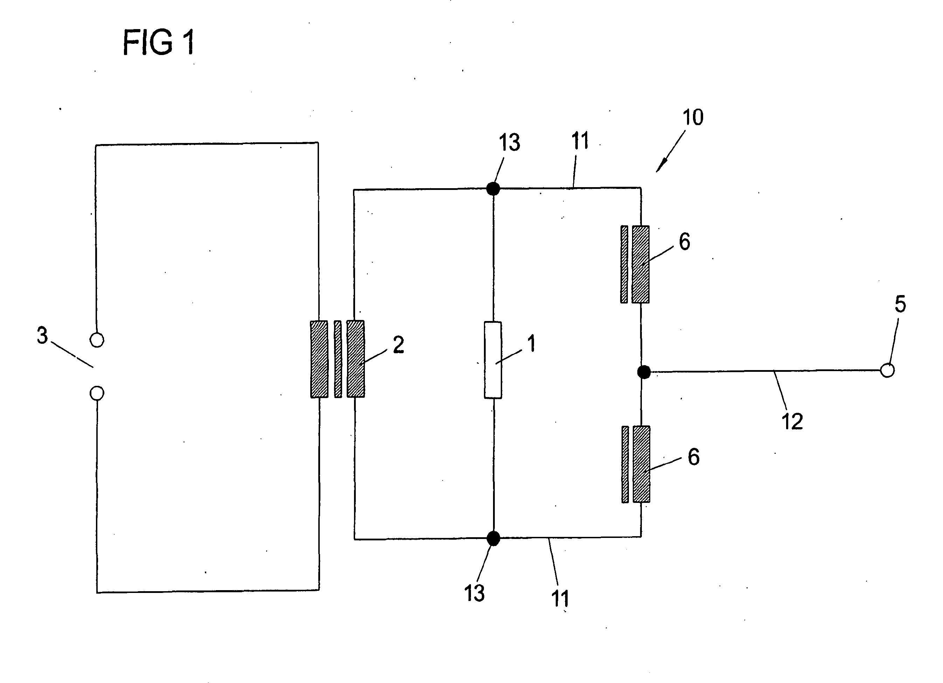

Die Figuren 1-4 zeigen unterschiedliche Ausführungsformen einer Sensorvorrichtung für ein elektrochemisches Messgerät mit einer Elektrode 1, die durch einen Heizstrom direkt beheizbar ist. Die Elektrode 1 weist Anschlüsse 13 auf, an die über einen Transformator 2 eine Versorgungsspannung 3 angelegt ist, die über den Transformator 2 einen Heizstrom durch die Elektrode 1 erzeugt. Ein Anschluss 5 für ein elektrochemisches Messgerät ist über eine Brückenschaltung 10 mit den Anschlüssen 13 der Elektrode 1 verbunden. Die Elektrode 1 weist somit lediglich zwei Anschlüsse 13 auf, über die zum einen ein Heizstrom an die Elektrode 1 angelegt ist, durch den die Elektrode 1 beheizt wird, und zum anderen der Anschluss 5 für das elektrochemische Messgerät mit der Elektrode 1 verbunden ist.

Der über die Brückenschaltung 10 mit den Anschlüssen 13 und somit mit der Elektrode 1 verbundene Anschluss 5 dient zur Verbindung mit dem elektrochemischen Messgerät. Das elektrochemische Messgerät erfasst dabei elektrochemische Signale, die mittels der Elektrode 1 gemessen und über die Brückenschaltung 10 an den Anschluss 5 geleitet werden. Die Brückenschaltung 10 weist jeweils zwei Anschlussarme 11 auf, die symmetrisch ausgebildet sind und an ihrem einen Ende mit dem Anschluss 13 der Elektrode 1 und an ihrem anderen Ende miteinander und mit dem Anschluss 5 verbunden sind. Durch die symmetrische Ausbildung der Anschlussarme 11 der Brückenschaltung 10 wird erreicht, dass störende Einflüsse, die durch den Heizstrom, der durch die Elektrode 1 fließt, erzeugt werden, sich gegenseitig am Anschluss 5 des elektrochemischen Messgerätes gerade kompensieren. Dieses wird dadurch bewirkt, dass die mit dem Anschluss 5 verbundenen Enden der Anschlussarme 11 der Brückenschaltung 10 aufgrund der symmetrischen Ausbildung der Anschlussarme 11 am an ihrem Verbindungspunkt gerade einen Punkt virtueller Masse für den Heizstrom darstellen, weil die beiden Anschlüsse 13 des Heizstroms aufgrund der angelegten Versorgungsspannung 3 auf gegensätzlichen Potentialen liegen, so dass das Heizstromsignal am Verbindungspunkt der Anschlussarme 11 und somit am Anschluss 5 für das elektrochemische Messgerät vernachlässigbar ist. Somit wird erreicht, dass Störungen aufgrund des durch die Elektrode 1 fließenden Heizstroms am Anschluss 5 des elektrochemischen Messgerätes weitestgehend unterdrückt werden.

Das elektrochemische Signal hingegen, das durch die Elektrode 1 gemessen und über die Brückenschaltung 10 an den Anschluss 5 geleitet wird, wird nicht unterdrückt, sondern überlagert sich konstruktiv am Verbindungspunkt der beiden Anschlussarme 11 und wird über einen Anschlusszweig 12 an den Anschluss 5 geleitet.

In den Figuren 1 - 4 sind Schaltbilder mit unterschiedlichen Ausführungsformen der Brückenschaltung 10 dargestellt. Die Ausführungsformen gemäß der Figuren 1 - 4 unterscheiden sich dabei zum einen in den für die Anschlussarme 11 der Brückenschaltung 10 verwendeten Bauelementen 4, 6 und zum anderen durch die im Anschlusszweig 12, der den Anschluss 5 für das elektrochemische Messgerät mit den Anschlussarmen 11 der Brückenschaltung 10 verbindet, angeordneten Bauelemente 7, 8, 9.

Bei der Sensorvorrichtung der Figur 1 sind jeweils eine Induktivität 6 in den Anschlussarmen 11 der Brückenschaltung 10 angeordnet, wobei die Induktivitäten 6 an ihrem einen Ende jeweils mit dem Anschluss 13 der Elektrode 1 und an ihrem anderen Ende über den Anschlusszweig 12 mit dem Anschuss 5 für das elektrochemische Messgerät verbunden sind. Bei dieser Ausbildung der Sensorvorrichtung erfolgt die Unterdrückung des störenden Heizstromsignals am Anschluss 5 durch zweierlei Maßnahmen. Zum einen kompensieren sich störende Heizstromsignale am Anschluss 5 durch die symmetrische Ausgestaltung der Anschlussarme 11 der Brückenschaltung 10 weitestgehend gegenseitig. Zum anderen wirken die Induktivitäten 6 für das hochfrequente, eine Frequenz von mindesten 1 kHz, bevorzugt aber größer als 100 kHz, aufweisende Heizstromsignal als hochohmige Impedanzen. Durch die Induktivitäten 6 wird das hochfrequente Heizstromsignal somit unterdrückt und eine Übertragung des störenden Heizstromsignals an den Anschluss 5 verhindert. Für das niederfrequente elektrochemische Signal, das durch die Elektrode 1 gemessen wird, hingegen sind die Impedanzen der Induktivitäten 6 vernachlässigbar klein, so dass das gemessene elektrochemische Signal nahezu ungehindert an den Anschluss 5 geleitet wird. Die Brückenschaltung 10 wirkt somit als Filter, der zum einen das störende Heizstromsignal unterdrückt, zum anderen das gemessene elektrochemische Signal aber ungehindert weiterleitet, so dass am Anschluss 5 auf empfindliche Weise ein elektrochemisches Signal mit einem großen Signal-zu-Rausch-Verhältnis erfasst werden kann.

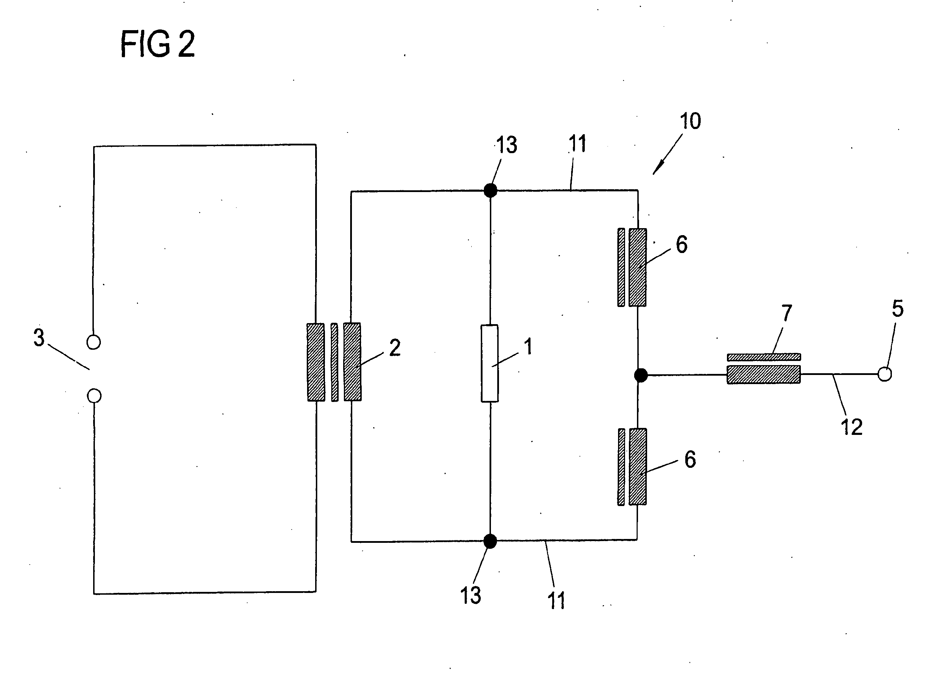

Eine Weiterentwicklung der Sensorvorrichtung gemäß der Figur 1 ist in der Figur 2 dargestellt. Bei der Sensorvorrichtung gemäß der Figur 2 ist zusätzlich zu der Induktivitäten 6 aufweisenden Brückenschaltung 10 eine Induktivität 7 im Anschlusszweig 12, der den Anschluss 5 mit der Brückenschaltung 10 verbindet, vorgesehen. Die Induktivität 7 im Anschlusszweig 12 wirkt dabei ähnlich wie die Induktivitäten 6 hochohmig für das hochfrequente Heizstromsignal, jedoch niederohmig für das zu erfassende elektrochemische Signal. Durch die Induktivität 7 werden somit die störenden Heizstromsignale zusätzlich unterdrückt, und eine zusätzliche Verbesserung des Übertragungsverhaltens der Sensorvorrichtung ist erzielbar.

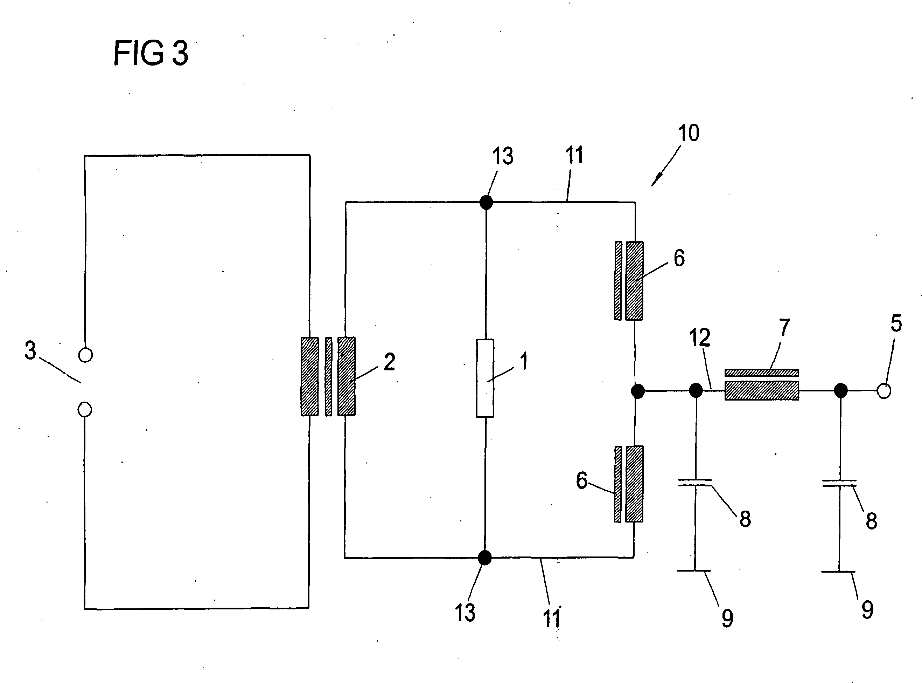

Um das Übertragungsverhaltung der Sensorvorrichtung weiter zu verbessern, können Kapazitäten verwendet werden, die zusammen mit der Induktivität 7 im Anschlusszweig 12 einen Sperrkreis ausbilden. Eine solche Ausbildung der Sensorvorrichtung ist in der Figur 3 dargestellt. Bei dieser Anordnung ist jeweils eine Kapazität 8 vor und hinter der Induktivität 7 im Anschlusszweig 12 der Anordnung vorgesehen, die jeweils als so genannter Shunt zwischen dem Anschlusszweig 12 und der Masse 9 wirkt. Zusammen mit der Induktivität 7 weisen die Kapazitäten 8 dabei ein Sperrkreisverhalten für bestimmte Frequenzen auf, das über die Kapazitätswerte bzw. den Induktivitätswert der Kapazitäten 8 bzw. der Induktivität 7 eingestellt werden kann. Vorteilhafterweise ist die Sperrfrequenz des durch die Kapazitäten 8 und die Induktivität 7 gebildeten Sperrkreises dabei auf die Frequenz des Heizstromes abgestimmt, so dass ein störendes Heizstromsignal, das residuell im Anschlusszweig 12 vorhanden ist, durch den Sperrkreis nahezu vollständig unterdrückt wird. Auf diese Weise ist erreichbar, dass am Anschluss 5 ein relativ schwaches elektrochemisches Signal messbar ist.

Die in den Figuren 1 - 3 dargestellten Ausbildungen der elektrochemischen Sensorvorrichtung sind insbesondere bei Verwendung hochfrequenter Heizstromsignale und der Erfassung niederfrequenter, insbesondere zeitlich quasi unveränderlicher elektrochemischer Signale zweckmäßig. Sollen hingegen zeitlich veränderliche elektrochemische Signale erfasst werden, bewirken die Induktivitäten 6, 7 der Anordnungen gemäß der Figuren 1 - 3 eine nicht gewünschte, störend wirkende Verzerrung des zu messenden elektrochemischen Signals. Um dieses zu vermeiden, können statt der Induktivitäten 6 in den Anschlussarmen 11 der Brückenschaltung 10 Widerstände 4 verwendet werden, deren Widerstandswert mindestens um eine Größenordnung, bevorzugt aber um zwei Größenordnungen, größer als der auf den Heizstrom wirkende Widerstandswert der Elektrode 1 ist. Dadurch wird bewirkt, dass der Heizstrom im Wesentlichen von den Anschlüssen 13 durch die Elektrode 1 fließt und nur zu einem Bruchteil durch die Anschlussarme 11 der Brückenschaltung 10 geleitet wird. Die Kompensation der störenden Heizstromsignale erfolgt dann im Wesentlichen durch die symmetrische Ausbildung der Anschlussarme 11 mit den Widerständen 4 der Brückenschaltung 10.

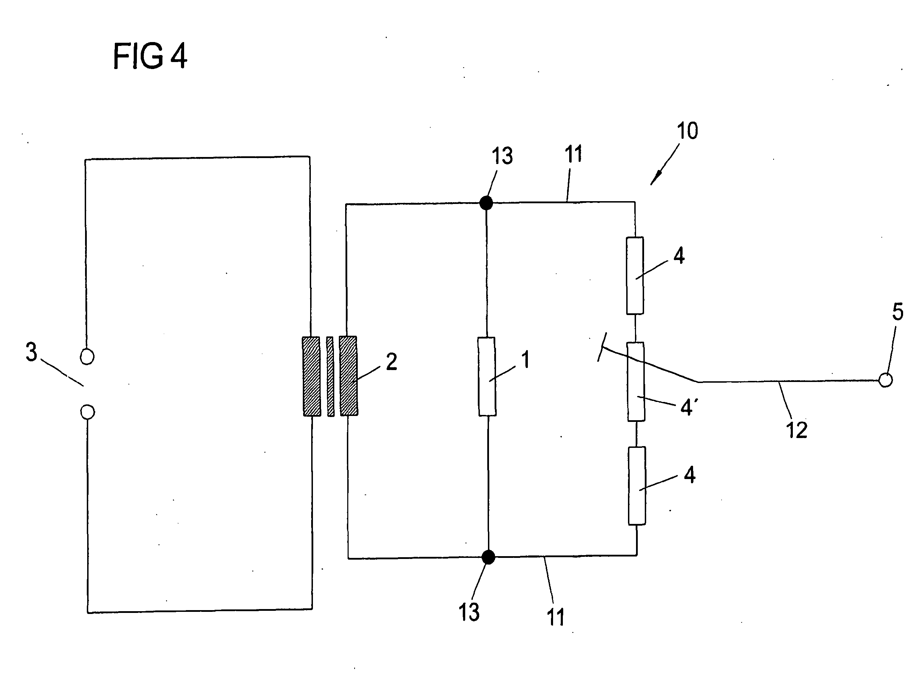

Es kann vorteilhaft sein, bei der Sensorvorrichtung gemäß der Figur 4 den Anschluss 5 für das elektrochemische Messgerät dann über einen Anschlusszweig 12 und einen zusätzlichen einstellbaren Widerstand 4' mit den Anschlussarmen 11 der Brückenschaltung 10 zu verbinden, wobei der einstellbare ohmsche Widerstand als Spannungsteiler in den beiden Anschlussarmen 11 der Brückenschaltung 10 wirkt. Über den einstellbaren Widerstand 4' ist dann ein Abgleich der Kompensation der störenden Heizstromsignale möglich, so dass Toleranzen ausgeglichen und Unsymmetrien in den Anschlussarmen 11 der Brückenschaltung 10 kompensiert werden können.

### 2. Elektrochemische Messungen mittels der Sensorvorrichtung

Die Sensorvorrichtung, deren Grundgedanke oben anhand der Figuren 1 bis 4 erläutert worden ist, ist in einer Vielzahl von Anwendungen einsetzbar, die im Folgenden beispielhaft beschrieben sind.

### Beispiel 1:

Zur selektiven elektrochemischen Erfassung der im Verlaufe einer Polymerase-Kettenreaktion (PCR) entstehenden PCR-Produkte wird eine als direkt heizbare Golddrahtelektrode ausgebildete Elektrode 1 eingesetzt, welche auf ihrer Oberfläche über Thiol-Linker immobilisierte DNA-Sondenstränge aufweist. Durch Einstellung einer stringenten Elektrodentemperatur während der Hybridisierung wird erreicht, dass nur PCR-Produkte mit der zu den Sondensträngen komplementären Sequenz an der Elektrodenoberfläche gebunden werden können. Die stringente Temperatur hat einen um 5 K geringeren Wert als die zur detektierenden Sequenz gehörende Schmelztemperatur. Bei ihrer Schmelztemperatur trennen sich Nukleinsäuredoppelstränge in ihre Einzelstränge auf. Die elektrochemische Detektierung erfolgt mit Hilfe eines Reporterstranges, der ebenfalls eine zum zu detektierenden PCR-Produkt komplementäre Sequenz aufweist und mit dem reversibel elektrochemisch aktiven Marker Ferrocen markiert sein kann. Durch die erfindungsgemäß mit der Elektrode 1 verbundene Brückenschaltung 10, mittels derer ein elektrochemisches Messgerät mit der Elektrode 1 gekoppelt ist, wird erreicht, dass bei fließendem Heizstrom die um neun Größenordnungen schwächeren elektrochemischen Signale der Ferrocen-markierten Reporterstränge registriert werden können, ohne dass eine symmetrische Elektrodenanordnung verwendet werden müsste, welche direkt an einer Elektrode einen dritten Anschluss für das elektrochemische Messgerät vorsieht. Durch Wegfall des dritten Anschlusses direkt an der Elektrode wird die präzise Einstellung einer gleichförmigen Elektrodentemperatur erleichtert, die Voraussetzung für das stringente Erfassen der gesuchten PCR-Produkte an den komplementären, auf der Elektrode immobilisierten Sondensträngen ist.

### Beispiel 2:

Zur Bestimmung der Kinetik des Enzyms Glucoseoxidase simultan bei Temperaturen von 0°C, 10°C, 20°C, 30°C, 40°C, 50°C und 60°C wird ein Elektrodenarray bestehend aus einer Vielzahl von direkt heizbaren Elektroden 1 verwendet. Die Reaktionsflächen, also die Flächen der Elektroden 1, an denen das elektrochemische Signal erfasst wird, werden mit der Glucoseoxidase durch Einschluss in eine Lackschicht modifiziert und in eine elektrochemische Zelle gebracht. Der Elektrolyt in der Zelle enthält 20 mM Glucose und 0,05 M Phosphatpuffer bei einem pH-Wert von 7 und wird mittels eines Thermostaten auf 0°C gehalten. Durch selektives Aufheizen werden die einzelnen Reaktionsflächen der Elektroden 1 auf die genannten Temperaturen zwischen 0°C und 60°C gebracht. Die Kinetik des Enzyms wird amperometrisch durch Oxidation des gebildeten Wasserstoffperoxids auf den einzelnen Elektroden 1 des Elektrodenarrays ermittelt. Durch den erfindungsgemäßen Anschluss jeweils eines elektrochemischen Messgeräts an die einzelnen Elektroden 1 des Elektrodenarrays mittels der Brückenschaltung 10 sind nur zwei Anschlüsse pro Elektrode 1 nötig und gleichzeitig wird das Störsignal, das durch den Heizstrom bedingt ist, der um ca. sechs Größenordnungen stärker als das elektrochemische Signal ist, minimiert. Der Aufbau des Elektrodenarrays und die Ansteuerung der Vielzahl von Elektroden 1 wird durch die Verwendung von je zwei Anschlüssen pro Elektrode 1 erheblich vereinfacht, verglichen mit Elektrodenanordnungen, die drei symmetrische Anschlüsse verwenden.

### Beispiel 3:

In einem Fließsystem können mittels Amperometrie Verbindungen bestimmt werden, die an einer Elektrode kinetisch gehemmte Reaktionen eingehen. Beispielsweise können aromatische Nitroverbindungen wie TNT und Dinitrobenzol im Ultraspurenbereich (ppb bis ppm) bestimmt werden. Als Elektrode 1 wird hierzu eine heizbare Platindrahtelektrode 1 verwendet, die über die Brückenschaltung 10 an das elektrochemische Messgerät angeschlossen ist. Während der amperometrischen Messungen wird die Elektrode 1 geheizt, so dass die kinetisch gehemmte Reduktion der Nitrogruppen beschleunigt abläuft. Durch den erfindungsgemäßen Anschluss des elektrochemischen Messgerätes über die Brückenschaltung 10 sind nur zwei Anschlüsse 13 an der geheizten Platindrahtelektrode 1 nötig. Da für diese Anwendung nur eine Platindrähtelektrode als Elektrode 1 für die Sensorvorrichtung im Fließsystem nötig ist, erhäit, man eine einfach aufgebaute, direkt heizbare Sensorvorrichtung.

### Beispiel 4:

Die Bestimmung aromatischer Nitroverbindungen nach Beispiel 3 kann bei Anwendung der so genannten Temperaturpulsamperometrie bei Temperaturen oberhalb des Siedepunktes des Elektrolyten durchgeführt werden. Dies wird durch die Verwendung sehr kurzer (vorzugsweise kürzer als 100 ms) Heizpulse ermöglicht, die ein wässriges Elektrolyt auf Temperaturen von über 200 °C erhitzten. Dadurch können kinetisch gehemmte Reaktionen erheblich beschleunigt werden. Bei konstantem, an die Elektrode 1 angelegtem negativen Potential zur Reduktion der Nitrogruppen erfolgt vor Beginn und vor Ende der Heizimpulse je eine Messung, aus denen die Differenz gebildet wird. Bei kleinen Elektrolytmengen (unter 10 ml) und bei Einsatz des Sensors in engen Fließsystemen (Durchmesser kleiner als 1 mm) werden kürzere Heizimpulse (1 bis 50 ms) verwendet, um die erzeugte Wärmemenge herabzusetzen. Die Heizstromstärke ist in diesem Fall zu erhöhen, um in der kürzeren Zeit die gleiche Temperatur zu erreichen. Durch die erfindungsgemäße Brückenschaltung 10 für den Anschluss des elektrochemischen Messgerätes sind nur zwei Anschlüsse 13 an der geheizten Platindrahtelektrode 1 nötig.

### Beispiel 5:

Die Bestimmung organischer Nitroverbindungen kann analog zu Beispiel 3, jedoch unter der Verwendung der Temperaturpulsvoltammetrie gemäß eines aus der DE 195 43 060 A1 bekannten Verfahrens erfolgen. Dabei werden eine lineare Spannungsrampe in negativer Richtung gefahren und dazu überlagert kurze Heizstrompulse angelegt. Vor Beginn und vor Ende eines jeden Heizstromimpulses erfolgt die elektrochemische Messung. Die Differenz beider Messungen dient als elektrochemisches Analysensignal. Durch den erfindungsgemäßen Anschluss des elektrochemischen Messgerätes sind auch bei dieser Anwendung nur zwei Anschlüsse 13 an der geheizten Platindrahtelektrode 1 nötig, was zu einer Vereinfachung im Aufbau der Sensorvorrichtung führt.

### Beispiel 6:

Geheizte Platinelektroden können sehr vorteilhaft, für die Bestimmung von Nicotinamidadenindinucleotid (NADH) eingesetzt werden (vergleiche C. Lau, G.-U. Flechsig, P. Gründler, J. Wang, Anal. Chim. Acta 554 (2005), Seiten 74-78). Demnach kann eine erhebliche Erhöhung des amperometrischen NADH-Signals erreicht werden, wenn die Bestimmung bei erhöhten Elektrodentemperaturen durchgeführt, die Analysenlösung aber bei konstanter Temperatur gehalten wird. Auf diese Weise kann das so genannte "Sensorfouling", das eine Abnahme der erfassten elektrochemischen Signale mit jeder Messung bewirkt, reduziert werden. Auch in diesem Fall ermöglicht der erfindungsgemäße Anschluss einer direkt geheizten Platinelektrode einen einfachen Aufbau einer Sensorvorrichtung zur Detektion von NADH, wobei die Platinelektroden beispielsweise Platindrähte oder -schichten enthalten können und vernachlässigbare Störsignale an das elektrochemische Messgerät geleitet werden.

### Bezugszeichenliste

- 1: Elektrode
- 2: Transformator
- 3: Versorgungsspannung
- 4: Widerstand im Anschlussarm der Brückenschaltung
- 4': Einstellbarer Widerstand
- 5: Anschluss des elektrochemischen Messgerätes
- 6: Induktivität im Anschlussarm der Brückenschaltung
- 7: Induktivität im Anschlusszweig des elektrochemischen Messgerätes
- 8: Kapazität
- 9: Masse
- 10: Brückenschaltung
- 11: Anschlussarm der Brückenschaltung
- 12: Anschlusszweig des elektrochemischen Messgerätes
- 13: Anschluss des Heizstroms

## Patentansprüche

1. Sensorvorrichtung für ein elektrochemisches Messgerät mit mindestens einer Elektrode (1), die mittels eines als Wechselstrom ausgebildeten Heizstroms beheizbar ist und einen ersten und einen zweiten Anschluss (13) für die Zuleitung des Heizstroms aufweist, wobei das elektrochemische Messgerät über einen dritten Anschluss (5) mit der Elektrode (1) verbindbar ist,
**dadurch gekennzeichnet,**
**dass** die Sensorvorrichtung eine Brückenschaltung (10) aufweist und die Verbindung des dritten Anschlusses (5) mit der Elektrode (1) über die Brückenschaltung (10), die mit dem ersten und zweiten Anschluss (13) verbunden ist, ausgebildet ist, wobei die Brückenschaltung (10) zwei symmetrische Anschlussarme (11) aufweist, die an ihrem einen Ende jeweils mit einem der beiden Anschlüssen (13) für die Zuleitung des Heizstroms und an ihrem anderen Ende miteinander und mit dem Anschluss (5) des elektrochemischen Messgerätes verbunden sind.

2. Sensorvorrichtung nach Anspruch 1, **dadurch gekennzeichnet, dass** die beiden Anschlussarme (11) der Brückenschaltung (10) symmetrisch ausgebildete Induktivitäten (6) aufweisen, die einen Induktivitätswert größer als 1 mH, insbesondere größer als 100 mH, und einen ohmschen Widerstand kleiner als 1 Ohm aufweisen.

3. Sensorvorrichtung nach einem der Ansprüche 1 oder 2, **dadurch gekennzeichnet, dass** in einem Anschlusszweig (12) zwischen dem Anschluss (5) des elektrochemischen Messgerätes und den beiden Anschlussarmen (11) der Brückenschaltung (10) eine zusätzliche Induktivität (7) angeordnet ist, die einen Induktivitätswert größer als 1 mH, insbesondere größer als 100 mH, und einen ohmschen Widerstand kleiner als 1 Ohm aufweist.

4. Sensorvorrichtung nach Anspruch 3, **dadurch gekennzeichnet, dass** vor und hinter der zusätzlichen Induktivität (7) im Anschlusszweig (12) jeweils eine Kapazität (8) angeordnet ist, die den Anschlusszweig (12) mit einer Masse (9) verbindet.

5. Sensorvorrichtung nach einem der vorangehenden Ansprüche, **dadurch gekennzeichnet, dass** die beiden Anschlussarme (11) der Brückenschaltung (10) symmetrisch ausgebildete ohmsche Widerstände (4) aufweisen.

6. Sensorvorrichtung nach Anspruch 5, **dadurch gekennzeichnet, dass** die ohmschen Widerstände (4) in den Anschlussarmen (11) zwischen dem Anschluss (5) des elektrochemischen Messgerätes und den beiden Anschlüssen (13) für die Zuleitung des Heizstroms einen Widerstandswert aufweisen, der um mindestens eine Größenordnung größer als der Widerstandswert der Elektrode ist.

7. Sensorvorrichtung nach einem der vorangehenden Ansprüche, **dadurch gekennzeichnet, dass** in einem Anschlusszweig (12) zwischen dem Anschluss (5) des elektrochemischen Messgerätes und den beiden Anschlussarmen (11) der Brückenschaltung (10) ein ohmscher Widerstand angeordnet ist.

8. Sensorvorrichtung nach einem der vorangehenden Ansprüche, **dadurch gekennzeichnet, dass** ein Anschlusszweig (12) zwischen dem Anschluss (5) des elektrochemischen Messgerätes und den beiden Anschlussarmen (11) der Brückenschaltung (10) über einen einstellbaren, als Spannungsteiler wirkenden ohmschen Widerstand (4') mit den beiden Anschlussarmen (11) der Brückenschaltung (10) verbunden ist.

9. Verfahren zur Durchführung elektrochemischer Messungen bei erhöhter Temperatur, unter Verwendung einer Sensorvorrichtung nach mindestens einem der Ansprüche 1 bis 8, mit einer direkt durch einen als Wechselstrom ausgebildeten elektrischen Heizstrom geheizten Elektrode, wobei die elektrochemischen Messungen gleichzeitig mit der elektrischen Heizung der Elektrode erfolgen, **gekennzeichnet durch** die Verwendung einer Brückenschaltung für den Anschluss eines elektrochemischen Messgerätes an die Elektrode (1), wobei mittels der Brückenschaltung (10) **durch** den Heizstrom erzeugte Störsignale am Anschluss des elektrochemischen Messgerätes unterdrückt werden, wobei die Brückenschaltung (10) zwei symmetrische Anschlussarme (11) aufweist, die an ihrem einen Ende jeweils mit einem der beiden Anschlüssen (13) für die Zuleitung des Heizstroms und an ihrem anderen Ende miteinander und mit dem Anschluss (5) des elektrochemischen Messgerätes verbunden sind.

10. Verfahren nach Anspruch 9, **dadurch gekennzeichnet, dass** die elektrochemischen Messungen unter Verwendung der Voltammetrie, Amperometrie, Potentiometrie, Chronopotentiometrie, Stripping-Potentiometrie, Coulometrie und/oder Chronocoulometrie zur Bestimmung von Stoffkonzentrationen oder unter Verwendung der Cyclovoltammetrie, Impedanzspektroskopie und/oder Spektroelektrochemie zur Untersuchung von Elektrodenvorgängen, insbesondere der Thermodynamik und Kinetik von Elektrodenreaktionen, der Abscheidung von Schichten und der Korrosion, durchgeführt werden.

11. Verfahren nach Anspruch 9 oder 10, **dadurch gekennzeichnet, dass** die elektrische Heizung der Elektrode (1) mittels kurzer Heizstrompulse, bevorzugt kürzer als 500 ms, insbesondere kürzer als 100 ms, erfolgt und die elektrochemische Messung des elektrochemischen Signals vor Beginn und/oder kurz vor Ende eines jeden Heizstrompulses erfolgt.

12. Verfahren nach Anspruch 11, **dadurch gekennzeichnet, dass** ein zeitlich konstantes Potential zur Durchführung der Amperometrie oder ein zeitlich linear veränderliches Potential zur Durchführung der Voltammetrie an die geheizte Elektrode angelegt wird.

## Claims

1. A sensor apparatus for an electrochemical measuring device having at least one electrode (1), which can be heated by means of a heating current formed as an alternating current and comprises a first and a second terminal (13) for supplying the heating current, wherein the electrochemical measuring device can be connected to said electrode (1) through a third terminal (5),
**characterized in that**
the sensor apparatus comprises a bridge circuit (10) and the connection of the third terminal (5) to the electrode (1) is formed through the bridge circuit (10) which is connected to the first and second terminals (13), wherein the bridge circuit (10) comprises two symmetrical terminal arms (11) which are connected at one of their ends to one of the two terminals (13) for supplying the heating current and are connected at their other end to one another and to the terminal (5) of the electrochemical measuring device.

2. The sensor apparatus as claimed in claim 1, **characterized in that** the two terminal arms (11) of the bridge circuit (10) comprise symmetrically formed inductors (6), which have an inductance of more than 1 mH, in particular more than 100 mH, and a resistance of less than 1 ohm.

3. The sensor apparatus as claimed in claim 1 or 2, **characterized in that** an additional inductor (7) is arranged in a terminal branch (12) between the terminal (5) of the electrochemical measuring device and the two terminal arms (11) of the bridge circuit (10), which has an inductance of more than 1 mH, in particular more than 100 mH, and a resistance of less than 1 ohm.

4. The sensor apparatus as claimed in claim 3, **characterized in that** a capacitor (8), which connects the terminal branch (12) to a reference ground (9), is respectively arranged before and after the additional inductor (7) in the terminal branch (12).

5. The sensor apparatus as claimed in one of the preceding claims, **characterized in that** the two terminal arms (11) of the bridge circuit (10) comprise symmetrically designed ohmic resistors (4).

6. The sensor apparatus as claimed in claim 5, **characterized in that** the ohmic resistors (4) in the terminal arms (11) between the terminal (5) for the electrochemical measuring device and the two terminals (13) for supplying the heating current have a resistance which is at least an order of magnitude greater than the resistance of the electrode.

7. The sensor apparatus as claimed in one of the preceding claims, **characterized in that** an ohmic resistor is arranged in the terminal branch (12) between the terminal (5) of the electrochemical measuring device and the two terminal arms (11) of the bridge circuit (10).

8. The sensor apparatus as claimed in one of the preceding claims, **characterized in that** the terminal branch (12) between the terminal (5) of the electrochemical measuring device and the two terminal arms (11) of the bridge circuit (10) is connected to the two terminal arms (11) of the bridge circuit (10) through an ohmic resistor (4') acting as a voltage divider.

9. A method for carrying out electrochemical measurements at high temperature by using a sensor apparatus as claimed in at least one of claims 1 to 8, with an electrode heated directly by an electrical heating current formed as an alternating current, the electrochemical measurements taking place simultaneously with the electrical heating of the electrode,
**characterized by**
the use of a bridge circuit for connecting an electrochemical measuring device to the electrode (1), wherein the bridge circuit (10) suppressing interference signals generated by the heating current at the terminal of the electrochemical measuring device, wherein the bridge circuit (10) comprises two symmetrical terminal arms (11) which are connected at one of their ends to one of the two terminals (13) for supplying the heating current and are connected at their other end to one another and to the terminal (5) of the electrochemical measuring device.

10. The method as claimed in claim 9, **characterized in that** the electrochemical measurements are carried out by using voltammetry, amperometry, potentiometry, chronopotentiometry, stripping potentiometry, coulometry and/or chronocoulometry in order to determine substance concentrations or by using cyclovoltammetry, impedance spectroscopy and/or spectroelectrochemistry in order to study electrode processes, in particular the thermodynamics and kinetics of electrode reactions, deposition of layers and corrosion.

11. The method as claimed in claim 9 or 10, **characterized in that** the electrical heating of the electrode (1) is carried out by means of short heating current pulses, preferably shorter than 500 ms, in particular shorter than 100 ms, and the electrochemical measurement of the electrochemical signal takes place before the start and/or shortly before the end of each heating current pulse.

12. The method as claimed in claim 11, **characterized in that** a temporally constant potential is applied to the heated electrode in order to carry out amperometry or a temporally linearly varying potential is applied to the heated electrode in order to carry out voltammetry.

## Revendications

1. Dispositif de capteurs pour un appareil de mesures électrochimiques comprenant au moins une électrode (1) qui peut être chauffée au moyen d'un courant de chauffage prenant la forme d'un courant alternatif et présente une première et une deuxième connexions (13) pour l'amenée du courant de chauffage, l'appareil de mesures électrochimiques pouvant être relié à l'électrode (1) par le biais d'une troisième connexion (5),
**caractérisé en ce que**
le dispositif de capteurs présente un montage en pont (10) et la liaison de la troisième connexion (5) à l'électrode (1) est formée par le biais du montage en pont (10), qui est relié avec la première et la deuxième connexion (13), le montage en pont (10) présentant deux pattes de connexion symétriques (11), qui sont reliées à une de leur extrémité respectivement à l'une des deux connexions (13) pour l'amenée du courant de chauffage et à leur autre extrémité l'une avec l'autre et avec la connexion (5) de l'appareil de mesures électrochimiques.

2. Dispositif de capteurs selon la revendication 1, **caractérisé en ce que** les deux pattes de connexion (11) du montage en pont (10) présentent des inductances (6) formées de manière symétrique, qui ont une valeur d'inductance supérieure à 1 mH, en particulier supérieure à 100 mH, et une résistance ohmique inférieure à 1 ohm.

3. Dispositif de capteurs selon l'une des revendications 1 ou 2, **caractérisé en ce qu'**une inductance (7) supplémentaire, qui a une valeur d'inductance supérieure à 1 mH, en particulier supérieure à 100 mH, et une résistance ohmique inférieure à 1 ohm, est disposée dans une branche de connexion (12) entre la connexion (5) de l'appareil de mesures électrochimiques et les deux pattes de connexion (11) du montage en pont (10).

4. Dispositif de capteurs selon la revendication 3, **caractérisé en ce que**, avant et après l'inductance (7) supplémentaire, respectivement une capacité (8), qui relie la branche de connexion (12) à une masse (9), est disposée dans la branche de connexion (12).

5. Dispositif de capteurs selon l'une des revendications précédentes, **caractérisé en ce que** les deux pattes de connexion (11) du montage en pont (10) présentent des résistances ohmiques (4) formées symétriquement.

6. Dispositif selon la revendication 5, **caractérisé en ce que** les résistances ohmiques (4) dans les pattes de connexion (11) situées entre la connexion (5) de l'appareil de mesures électrochimiques et les deux connexions (13) pour l'amenée du courant de chauffage présentent une valeur de résistance qui est supérieure à la valeur de résistance de l'électrode d'au moins un ordre de grandeur.

7. Dispositif selon l'une des revendications précédentes, **caractérisé en ce qu'**une résistance ohmique est disposée dans une branche de connexion (12) entre la connexion (5) de l'appareil de mesures électrochimiques et les deux pattes de connexion (11) du montage en pont (10).

8. Dispositif selon l'une des revendications précédentes, **caractérisé en ce qu'**une branche de connexion (12) entre la connexion (5) de l'appareil de mesures électrochimiques et les deux bras de connexion (11) du montage en pont (10) est reliée aux deux pattes de connexion (11) du montage en pont (10) par le biais d'une résistance ohmique (4') réglable, faisant office de répartiteur de tension.

9. Procédé de réalisation de mesures électrochimiques à hautes températures, en utilisant un dispositif de capteurs selon au moins une des revendications 1 à 8, avec une électrode chauffée directement par un courant de chauffage électrique prenant la forme d'un courant alternatif, les mesures électrochimiques se faisant simultanément au chauffage électrique de l'électrode,
**caractérisé par**
l'utilisation d'un montage en pont pour la connexion d'un appareil de mesure électrochimique à l'électrode (1), les signaux de bruits produits par le courant de chauffage au moyen du montage en pont (10) étant réprimés au niveau de la connexion de l'appareil de mesures électrochimiques, le montage en pont (10) présentant deux pattes de connexion symétriques (11), qui sont reliées à une de leur extrémité respectivement à l'une des deux connexions (13) pour l'amenée du courant de chauffage et à leur autre extrémité à la connexion (5) de l'appareil de mesures électrochimiques.

10. Procédé selon la revendication 9, **caractérisé en ce que** les mesures électrochimiques sont réalisées en utilisant la voltamétrie, l'ampérométrie, la potentiométrie, la chronopotentiométrie, la stripping- potentiométrie, la coulométrie et/ou la chronocoulométrie pour la détermination des concentrations en substances ou en utilisant la cyclovoltamétrie, la spectroscopie par impédance et/ou la spectroélectrochimie pour l'analyse des processus des électrodes, en particulier la thermodynamique et la cinétique des réactions des électrodes, le dépôt de couches et la corrosion.

11. Procédé selon la revendication 9 ou 10, **caractérisé en ce que** le chauffage électrique de l'électrode (1) se fait au moyen de courtes impulsions de chauffage, de préférence inférieures à 500 ms, en particulier inférieures à 100 ms, et que la mesure électrochimique du signal électrochimique se fait avant le début et/ou juste avant la fin de chaque impulsion de chauffage.

12. Procédé selon la revendication 11, **caractérisé en ce qu'**un potentiel temporellement constant est appliqué à l'électrode chauffée pour la réalisation de l'ampérométrie ou un potentiel variable linéairement temporellement est appliqué à l'électrode chauffée pour la réalisation de la voltamétrie.
